# FASCICULE DE BREVET EUROPEEN

(11) **EP 0 545 827 B1**
(45) Date de publication et mention de la délivrance du brevet: **16.04.1997**
(21) Numéro de dépôt: 92403284.0
(22) Date de dépôt: 04.12.1992
(51) Int. Cl.: C04B 28/26, E02D 3/12

(54) **Coulis d'injection pour obturer les pores de sols fins ou de milieux microfissurés et son procédé de fabrication**
Injektionsschlamm zum Ausfüllen von Poren in feinkörnigen Böden und in Mikrorissumgebungen und Verfahren zu seiner Herstellung
Injection grout for filling pores of finegraded soils or micro-cracked surroundings and process of making it

(30) Priorité: 06.12.1991 FR 9115155
(43) Date de publication de la demande: 09.06.1993
(73) Titulaire: COMPAGNIE DU SOL, 92000 Nanterre (FR)
(72) Inventeur: Vattement, Hubert, F-77130 Montereau (FR); Gouvenot, Daniel, F-92110 Clichy (FR)
(74) Mandataire: Hasenrader, Hubert

(56) Documents cités:
- EP-A- 0 213 030
- EP-A- 0 336 825
- AU-B- 487 701
- DE-A- 2 228 791
- DE-A- 3 133 503
- FR-A- 2 127 741
- FR-A- 2 583 441
- FR-A- 2 667 887
- PATENT ABSTRACTS OF JAPAN vol. 13, no. 367 (C-626)15 Août 1989
- PATENT ABSTRACTS OF JAPAN vol. 14, no. 531 (C-780)21 Novembre 1990
- PATENT ABSTRACTS OF JAPAN vol. 14, no. 431 (C-759)17 Septembre 1990

## Description

La présente invention a pour objet un coulis d'injection destiné à obturer les pores des sols fins ou des milieux microfissurés tels que les maçonneries, bétons ou rochers et son procédé de fabrication.

La société demanderesse a déjà décrit dans sa demande de brevet européen n° 0 336 825 un coulis d'injection obtenu par mélange d'un composé à base de poudre de laitier de haut-fourneau en suspension dans l'eau et d'une liqueur de silice présentant un rapport SiO₂/Na₂O inférieur à 2 et une teneur en silice supérieure à environ 10% en poids.

Ce coulis d'injection donne généralement des résultats satisfaisants, mais il peut se révéler parfois d'une injectabilité délicate dans des sols ou dans des produits présentant une perméabilité très faible, par exemple de 10⁻⁴ m/s.

La présente invention est relative à un perfectionnent au coulis décrit dans la demande de brevet européen 0 336 825 pour permettre des injections dans des terrains ou matériaux de très faible perméabilité.

La présente invention a pour objet un coulis d'injection pour réaliser l'étanchéification et/ou la consolidation de sols ou de matériaux présentant une très faible perméabilité, du type constitué par le mélange d'une poudre à base de laitier de haut-fourneau en suspension dans l'eau et d'une liqueur de silice, caractérisé par le fait que la liqueur de silice présente un rapport molaire SiO₂/Na₂O inférieur à 0,8 et une teneur pondérale en silice comprise entre environ 0,01% et 5% et de préférence voisine de 0,5%.

Le coulis selon l'invention présente l'avantage d'être d'un mode de réalisation simple et économique et de permettre une étanchéification et/ou une consolidation aisée de sols de très faible perméabilité.

On sait que les coulis à base de laitier ne sont généralement pas stables du fait que leurs particules ont une forte tendance à ne pas rester en suspension dans l'eau et à donner lieu par gravité à une sédimentation.

Pour stabiliser de telles suspensions de particules de laitier, il est nécessaire de donner une rigidité suffisante au liquide dans lequel ces particules sont mises en suspension.

Les liqueurs de silice précédemment décrites par la société demanderesse qui ont une teneur pondérale en silice supérieure à 10% permettent d'obtenir des rigidités qui stabilisent le coulis, mais la rigidité qui est ainsi obtenue est souvent trop élevée pour permettre une injection satisfaisante dans les pores les plus fins des matériaux ou des sols.

De surcroit, si l'on augmente la rigidité du coulis injecté, la pression d'injection doit être plus élevée et la pénétrabilité de la suspension dans le sol s'en trouve diminuée.

Les expériences effectuées par la société demanderesse ont montré qu'un utilisant une liqueur de silice dont le rapport molaire SiO₂/Na₂O est inférieur à 0,8 et en limitant la teneur en silice dans la liqueur à une valeur inférieure à 5% en poids, on obtient une rigidité suffisante pour que le coulis soit encore stable lors de son injection, sans diminuer de manière gênante la pénétrabilité du coulis dans les micropores ou les microfissures du milieu à injecter.

Conformément à l'invention et selon un mode de réalisation particulier, le colis qui vient d'être décrit est de préférence fabriqué par mélange des trois constituants suivants.

Le premier constituant est une poudre à base de laitier de haut-fourneau dispersée dans de l'eau additionnée d'un agent dispersant.

Cette poudre qui est par exemple du laitier, du ciment de laitier, ou tout autre produit contenant du laitier, a de préférence les dimensions de particules inférieures à 15 microns, par exemple 10 microns ou moins.

Une telle suspension peut être obtenue en particulier selon le procédé du brevet français de la demanderesse n°85 08886 du 12 Juin 1985 ou selon celui de la demande de brevet français de la demanderesse n° 90 12703 du 15 Octobre 1990.

Le deuxième constituant est une liqueur de silice obtenue en faisant dissoudre dans de la soude se présentant le préférence sous la forme d'une solution de 35 à 37°B, une poudre de silice ou de produit siliceux dont les dimensions de particules sont de préférence inférieures à 100 microns et si possible inférieures à 50 microns.

Le troisième constituant est une suspension de filler qui peut être constituée par toute poudre fine choisie en fonction des caractéristiques que l'on désire modifier.

On peut en particulier utiliser du carbonate de calcium, du carbonate de magnésium, du carbonate double de magnésium et de calcium tel que de la dolomie, ou encore un filler inerte.

Par le choix du filler, il est possible de modifier la densité du coulis, sa résistance mécanique finale ou encore la stabilité physique du coulis, ainsi que son pH.

Selon un mode de réalisation préféré de l'invention, on utilise comme filler de la poudre de dolomie qui permet de moduler la résistance du coulis après solidifcation ainsi que de réduire son pH et d'améliorer sa stabilité.

Dans une variante, le filler peut être remplacé par du ciment fin.

Le coulis selon l'invention peut également contenir un quatrième constituant qui est un agent dispersant choisi par exemple parmi les napthalènes sulfonates ou la mélamine et ses dérivés.

Le mélange des trois constituants principaux du coulis selon ce mode de mise en oeuvre de l'invention permet permet d'adapter les caractéristiques du coulis après solidification en faisant varier les proportions relatives de ses différents constituants.

Dans un tel mélange à partir de trois constituants, si l'on augmente la proportion de laitier on obtient un accroissement de la stabilité et de la résistance du coulis après qu'il ait effectué sa prise ainsi qu'une diminution de la perméabilité de ce dernier.

Le produit à base de laitier peut être par exemple du laitier de haut-fourneau réduit en poudre, du ciment de laitier contenant par exemple 85% de laitier et 15% de klinker ou toute autre poudre de produit contenant une proportion suffisante de laitier.

En augmentant la proportion de liqueur de silice, on accroît 141a stabilité du coulis et sa résistance après prise sans modifier sensiblement la perméabilité de ce dernier.

L'accroissement du rapport SiO₂/Na₂O entraîne une augmentation de la stabilité du coulis sans avoir d'action sur sa résistance et sa perméabilité après prise.

Une augmentation de la teneur en filler provoque une augmentation de la stabilité du coulis sans modifier sensiblement la résistance après prise de ce dernier mais en diminuant sa perméabilité.

On a observé que, conformément à l'invention, un coulis ayant un pH initial de l'ordre de 13/13,5 possède, sa prise effectuée, un pH de valeur 12/12,5, c'est-à-dire un pH comparable au coulis directement fabriqué avec des ciments Portland.

Cette diminution du pH lors de la prise du coulis se manifeste d'une manière particulièrement marquée lorsque selon l'invention on utilise des fillers contenant du magnésium tels que la dolomie qui, de manière surprenante, se sont révélés plus efficaces que les carbonates pour réaliser une baisse du pH lors de la solidification du coulis.

Dans une variante le coulis selon l'invention peut ne pas contenir de suspension de filler mais sa stabilité peut s'en trouver réduite et sa perméabilité augmentée.

Il est souhaitable, selon l'invention, d'introduire dans le coulis des particules ayant une taille de grain la plus faible possible, par exemple inférieure à 100 microns et si possible à 50 microns. De telles suspensions de particules peuvent être obtenues selon les procédés brevetés par la société demanderesse qui ont été rappelés ci-dessus, et qui font appel à la décantation ou à la centrifugation.

Dans le but de mieux faire comprendre l'invention on va en décrire maintenant à titre d'illustration et sans aucun caractère limitatif plusieurs modes de réalisation donnés à titre d'exemples.

### Exemple 1

Pour injecter des terrains fins ayant une perméabilité de 10⁻⁴m/s, on réalise une suspension dans l'eau de poudre de laitier ayant des dimensions maximales de particules de 10 microns. Cette suspension peut être obtenue par centrifugation ou par décantation. La teneur en poudre de laitier de cette suspension est de 250 kg/m³ d'eau.

On réalise ensuite une liqueur de silice en introduisant 0,5% en poids de silice fine dans une lessive de soude à 35/37° B. Cette liqueur a un rapport molaire SiO₂/Na₂O de 0,02.

On réalise enfin une suspension de dolomie dont les particules ont une granulométrie comprise entre 0 et 10 microns, à raison de 350 kg de dolomie par m³ d'eau.

On réalise ensuite le coulis en mélangeant au moment de l'emploi :

| | |
|---|---|
| - suspension de laitier telle que décrite | 400 litres |
| - suspension de dolomie telle que décrite | 580 litres |
| - liqueur de silice telle que décrite | 29 litres |
| - agent dispersant (résine mélamine) | 6 litres |

Le coulis ainsi obtenu contient 100 kg de laitier et 200 kg de dolomie, soit au total 300 kg de matière sèche par m³.

Son temps de prise est d'environ 1 heure, et sa ressuée n'excède pas 5%.

Ce coulis est injectable dans un sable dont la perméabilité est de 10⁻⁴m/s.

A sa fabrication, le pH du coulis est de 13,2 mais tombe à 12,2 après la prise.

La résistance du coulis à 7 jours est d'environ 15 bars.

### Exemple 2

Pour traiter les mêmes terrains que ceux visés à l'exemple 1, on réalise un coulis en mélangeant :

| | |
|---|---|
| - suspension de laitier décrite à l'exemple 1 | 200 litres |
| - suspension de dolomie décrite à l'exemple 1 | 430 litres |
| - liqueur de silice analogue à celle de l'exemple 1 mais dans laquelle le rapport molaire SiO₂/Na₂O est égal à 0,3 | 29 litres |
| - Eau | 340 litres |

Le coulis ainsi obtenu contient 50 kg de laitier et 150 kg de dolomie, soit 200 kg de matière sèche au m³.

Ce coulis a un temps de prise d'environ 1 h 30, et sa ressuée n'excède pas 5%.

Ce coulis est injectable dans des sables de perméabilité 10⁻⁴m/s.

Son pH du coulis est de 12,5 après sa prise.

Ce coulis a une résistance à 7 jours d'environ 5 bars.

### Exemple 3

Pour traiter par injection des sables ayant une perméabilité d'environ 10⁻⁴m/s, on réalise une suspension de poudre de laitier dont les particules ont une granulométrie comprise entre 0 et 10 microns. Cette suspension contient 250 kg de laitier par m³ d'eau. La granulométrie du laitier peut être obtenue par centrifugation ou sédimentation selon les procédés auxquels il a déjà été fait référence ci-dessus.

On fabrique une suspension de calcite dont les particules ont une granulométrie comprise entre 0 et 10 microns à raison de 350 kg de calcite par m³ d'eau.

On obtient ensuite le coulis en mélangeant les constituants suivants :

| | |
|---|---|
| - suspension de laitier telle que décrite | 200 litres |
| - suspension de calcite telle que décrite | 430 litres |
| - liqueur de silice analogue à celle de l'exemple 1 mais dans laquelle le rapport molaire SiO₂/Na₂O est égal à 0,8 | 29 litres |
| - eau | 340 litres |
| - agent défloculant (naphtalène sulfanate) | 6 litres |

Le coulis ainsi obtenu a une concentration en laitier de 50 kg et en calcite de 150 kg, soit une teneur en matière sèche de 200 kg/m³.

Son temps de prise est d'environ 1 h 30. Sa ressuée est d'environ 30%.

Le pH de ce coulis qui est de 13,5 à l'origine n'est pas abaissé après la prise.

La résistance de ce coulis à 7 jours est de 5 à 7 bars.

### Exemple 4

Pour consolider un terrain alluvionnaire ayant une perméabilité comprise entre 10⁻⁴ et 10⁻³m/s, on fabrique une suspension de laitier dont les particules ont une granulométrie comprise entre 0 et 10 microns, à raison de 250 kg de laitier par m³ d'eau.

On fabrique également une liqueur de silice contenant 3% de silice solubilisée dans une lessive de soude telle que celle utilisée dans les exemples précédents. Cette liqueur a un rapport molaire SiO₂/Na₂O égal à 0,5.

Le coulis est obtenu en mélangeant :

| | |
|---|---|
| - suspension de laitier telle que décrite | 750 litres |
| - liqueur de silice telle que décrite | 29 litres |
| - eau | 211 litres |
| - agent dispersant (résine mélamine) | 7 litres |

Ce coulis contient 200 kg de laitier au m³.

Il est peu stable et on ne note pas après solidification de modification de son pH d'origine.

La résistance à 7 jours du terrain traité est comprise entre 25 et 50 bars.

Il est bien entendu que les exemples ci-dessus ne sont donnés qu'à titre indicatif et qu'ils peuvent être modifiés comme indiqué dans la description sans sortir pour cela du cadre de l'invention.

## Revendications

1. Coulis d'injection pour réaliser l'étanchéification et/ou la consolidation de sols ou de matériaux présentant une très faible perméabilité, du type constitué essentiellement par le mélange d'une poudre à base de laitier en suspension dans l'eau et d'une liqueur de silice, caractérisé par le fait que la liqueur de silice présente un rapport molaire SiO₂/Na₂O inférieur à 0,8 et une teneur en silice comprise entre environ 0,01 et 5% en poids.

2. Coulis selon la revendication 1, caractérisé par le fait que la liqueur de silice a une teneur en silice d'environ 0,5% en poids.

3. Coulis selon l'une quelconque des revendications précédentes, caractérisé par le fait que la poudre à base de laitier a des dimensions de particules inférieures à 10 microns.

4. Coulis selon l'une quelconque des revendications précédentes, caractérisé par le fait que ses plus grosses particules ont une dimension inférieure à environ 100 microns et de préférence inférieure à 50 microns.

5. Coulis selon l'une quelconque des revendications précédentes, caractérisé par le fait qu'il contient un filler.

6. Coulis selon la revendication 5, caractérisé par le fait qu'il contient un filler inerte.

7. Coulis selon la revendication 5, caractérisé par le fait qu'il contient un filler à base de magnésium tel que le carbonate de magnésium ou le carbonate double de magnésium et de calcium (dolomie).

8. Coulis selon la revendication 5, caractérisé par le fait qu'il contient un filler constitué par du carbonate de calcium.

9. Coulis selon l'une quelconque des revendications 1 à 4, caractérisé par le fait qu'il contient du ciment fin.

10. Procédé de fabrication du coulis selon l'une quelconque des revendications 1 à 4, caractérisé par le fait que l'on mélange une poudre à base de laitier de haut-fourneau dispersée dans de l'eau additionnée d'un agent dispersant avec une liqueur de silice obtenue en faisant dissoudre dans de la soude, de préférence sous la forme d'une solution de 35 à 37°B, une poudre de silice ou de produit siliceux dont les dimensions de particules sont de préférence inférieures à 100 microns et si possible inférieures à 50 microns.

11. Procédé selon la revendication 10, caractérisé par le fait que l'on ajoute également au mélange une suspension de filler ou de ciment fin.

## Claims

1. Injection grout for sealing and/or consolidating soils or materials having a very low permeability, of the type constituted essentially by the mixture of a slag-based powder in suspension in water and a silica solution, characterised by the fact that the silica solution has an SiO₂/Na₂0 molar ratio of less than 0.8 and a silica content comprised between about 0.01 and 5% by weight.

2. Grout according to Claim 1, characterised by the fact that the silica solution has a silica content of about 0.5% by weight.

3. Grout according to either one of the preceding claims, characterised by the fact that the slag-based powder has particle sizes of less than 10 microns.

4. Grout according to any one of the preceding claims, characterised by the fact that its largest particles have a size less than about 100 microns and preferably less than 50 microns.

5. Grout according to any one of the preceding claims, characterised by the fact it contains a filler.

6. Grout according to Claim 5, characterised by the fact that it contains an inert filler.

7. Grout according to Claim 5, characterised by the fact that it contains a magnesium-based filler such as magnesium carbonate or dual magnesium and calcium carbonate (dolomite).

8. Grout according to Claim 5, characterised by the fact that it contains a filler constituted by calcium carbonate.

9. Grout according to any one of Claims 1 to 4, characterised by the fact that it contains fine cement.

10. A process for manufacturing the grout according to any one of Claims 1 to 4, characterised by the fact that a powder based on blast-furnace slag, dispersed in water with the addition of a dispersing agent, is mixed with a silica solution obtained by causing to dissolve in soda, preferably in the form of a solution of 35 to 37°B, a powdered silica or a powdered siliceous product, with particle sizes preferably less than 100 microns and if possible less than 50 microns.

11. A process according to Claim 10, characterised by the fact that a suspension of filler or fine cement is also added to the mixture.

## Patentansprüche

1. Injizierbare Vergußmasse um die Abdichtung und Verfestigung von Böden oder Materialien, die eine sehr geringe Durchlässigkeit besitzen, zu schaffen, von der Type, die im wesentlichen aus einer Mischung eines Pulvers auf Schlackenbasis, suspendiert in Wasser und einer Siliziumdioxidlösung besteht, dadurch gekennzeichnet, daß die Siliziumdioxidlösung ein Mol-Verhältnis SiO₂/Na₂O von unter 0,8 und einen Siliziumdioxidgehalt zwischen etwa 0,01 und 5 Gew.-% aufweist.

2. Mischung nach Anspruch 1, dadurch gekennzeichnet, daß die Siliziumdioxidlösung einen Siliziumdioxidgehalt von etwa 0,5 Gew.-% aufweist.

3. Zusammensetzung nach einem der vorstehenden Ansprüche, dadurch gekennzeichnet, daß das Pulver auf Schlackenbasis eine Partikelgröße von unter 10 Mikron aufweist.

4. Mischung nach einem der vorstehenden Ansprüche, dadurch gekennzeichnet, daß ihre größten Partikel eine Abmessung von unter etwa 100 Mikron und vorzugsweise von unter 50 Mikron aufweisen.

5. Mischung nach einem der vorstehenden Ansprüche, dadurch gekennzeichnet, daß sie ein Füllmittel enthält.

6. Mischung nach Anspruch 5, dadurch gekennzeichnet, daß das Füllmittel inert ist.

7. Mischung nach Anspruch 5, dadurch gekennzeichnet, daß sie ein Füllmittel auf der Basis von Magnesium, wie Magnesiumcarbonat oder Magnesium-Calciumbicarbonat (Dolomit) enthält.

8. Mischung nach Anspruch 5, dadurch gekennzeichnet, daß das Füllmittel aus Calciumcarbonat besteht.

9. Mischung nach einem der Ansprüche 1 bis 4, dadurch gekennzeichnet, daß sie Feinzement enthält.

10. Verfahren zur Herstellung einer Mischung nach einem der Ansprüche 1 bis 4, dadurch gekennzeichnet, daß man ein Pulver auf der Basis von Hochofenschlacke in Wasser unter Zugabe eines Dispersionsmittels dispergiert und mit einer Siliziumdioxidlösung mischt, die man erhält, indem man Siliziumdioxidpulver oder ein Kieselerdeprodukt, dessen Partikelabmessungen vorzugsweise kleiner als 100 Mikron und wenn möglich unter 50 Mikron liegen, in Natronlauge, die vorzugsweise in Form einer Lösung von 35 bis 37°B vorliegt, auflöst.

11. Verfahren nach Anspruch 10, dadurch gekennzeichnet, daß man der Mischung auch eine Suspension von Füllmittel oder Feinzement zufügt.
